Europäisches Patentamt

European Patent Office  (11) Publication number: **0 076 020**

Office européen des brevets  **A2**

(19)

(12) **EUROPEAN PATENT APPLICATION**

(21) Application number: **82303113.3**  (51) Int. Cl.³: **F 23 D 17/00**
                                              **F 23 G 7/00**
(22) Date of filing: **16.06.82**

(30) Priority: **30.09.81 FR 8118476**

(43) Date of publication of application:
**06.04.83 Bulletin 83/14**

(84) Designated Contracting States:
**BE DE GB NL**

(71) Applicant: **AIR PRODUCTS AND CHEMICALS, INC.**
**P.O. Box 538**
**Allentown, Pennsylvania 18105(US)**

(72) Inventor: **Perrier, Jean Luc Gustave Gilbert**
**6 Square Castiglione Residence des Tuileries**
**F-78150, Le Chesnay(FR)**

(72) Inventor: **Colliot, Gerard Robert**
**7 Rue Gambetta**
**60330 Plessis Belleville(FR)**

(74) Representative: **Lucas, Brian Ronald**
**c/o Air Products Limited Hersham Place Molesey Road**
**Walton-on-Thames Surrey, KT12 4RZ(GB)**

(54) Burner for plastics materials.

(57) A burner (1) for burning particulate plastics material comprises a feed chamber (2), a mixing chamber (3), an inlet (4) for admitting particulate plastics material into said feed chamber (2), a tube (5) extending between said feed chamber (2) and said mixing chamber (3), means (6) for cooling said tube (5), a pipe (9) for introducing air or oxygen enriched air into said feed chamber (2) to entrain particulate plastics material in said feed chamber (2) and convey it through said tube (5) into said mixing chamber (3), a first set of openings (10) arranged to introduce oxygen enriched air into said mixing chamber (3) so that it flows around the circumference of said mixing chamber in one sense, a second set of openings (11) axially displaced from said first set of openings (10) and arranged to introduce oxygen enriched air into said mixing chamber (3) so that it flows around the circumference of said mixing chamber (3) in the opposite sense, and at least one conduit (15) for introducing a fuel into said mixing chamber adjacent the outlet of said tube (5).

EP 0 076 020 A2

## BURNER

This invention relates to burners for burning particulate plastics materials.

Considerable quantities of aluminium and copper are recovered from plastic coated electric cables. The particulate, impure plastics byproduct generally contains small quantities of aluminium and copper and, in many cases, it is uneconomic to recover the plastic for further use.

A number of burners have been designed to burn impure plastics material in the presence of natural gas and air or oxygen enriched air. Our experiments have shown that, in the case of plastics materials having a size in the range 1 to 3 mm, (18 to 7 mesh ASTM E 11-61) known burners operating on natural gas and air can only consume sufficient plastics material to provide around 30% of the total heat output of the burner. Using oxygen enriched air containing 25% (by volume) oxygen known burners can consume sufficient plastics material to provide nearly 50% of the total heat output of the burner. It should be noted that in each case the plastics material is substantially wholly consumed.

The object of at least the preferred embodiment of the present invention is to provide a burner which will operate with at least 70% of the heat output provided by plastics material having a size between 1 and 3 mm when supplied with oxygen enriched air containing 25% (by volume) oxygen and natural gas.

According to the present invention there is provided a burner for burning particulate plastics material which burner comprises a feed chamber, a mixing chamber of generally circular internal cross-section, an inlet for admitting particulate plastics material into said feed chamber, a tube of substantially uniform internal cross-section extending between said feed chamber and said mixing chamber, means for, in use, cooling said tube, a pipe for, in use, introducing air or oxygen enriched air into said feed chamber to entrain particulate plastics material in said feed chamber and convey it through said tube into said mixing chamber, a first set of openings arranged to introduce oxygen enriched air into said mixing chamber so that it flows around the circumference of said mixing chamber in one sense, a second set of openings axially displaced from said first set of openings and arranged to introduce oxygen enriched air into said mixing chamber so that it flows around the circumference of said mixing chamber in the opposite sense, and at least one conduit for introducing a fuel into said mixing chamber adjacent the outlet of said tube.

Preferably, the means for cooling said tube comprises a water jacket. The tube, could, however, be cooled by, for example, passing air along the outside of the tube and allowing the air to enter the mixing chamber.

Preferably, the tube is positioned on the longitudinal axis of the burner and there are several conduits for introducing said fuel into said mixing chamber circumjacent the tube.

The fuel will normally be a gas, for example natural gas, although other fuel gases, for example propane and butane, are also acceptable. Alternatively, the fuel could be liquid, for example oil.

Whilst the burner is particularly suitable for buring particles of 1 to 3 mm it is also suitable for burning particles of 10 microns upwards. In practice, it is unlikely to be used for particles in excess of 5 mm.

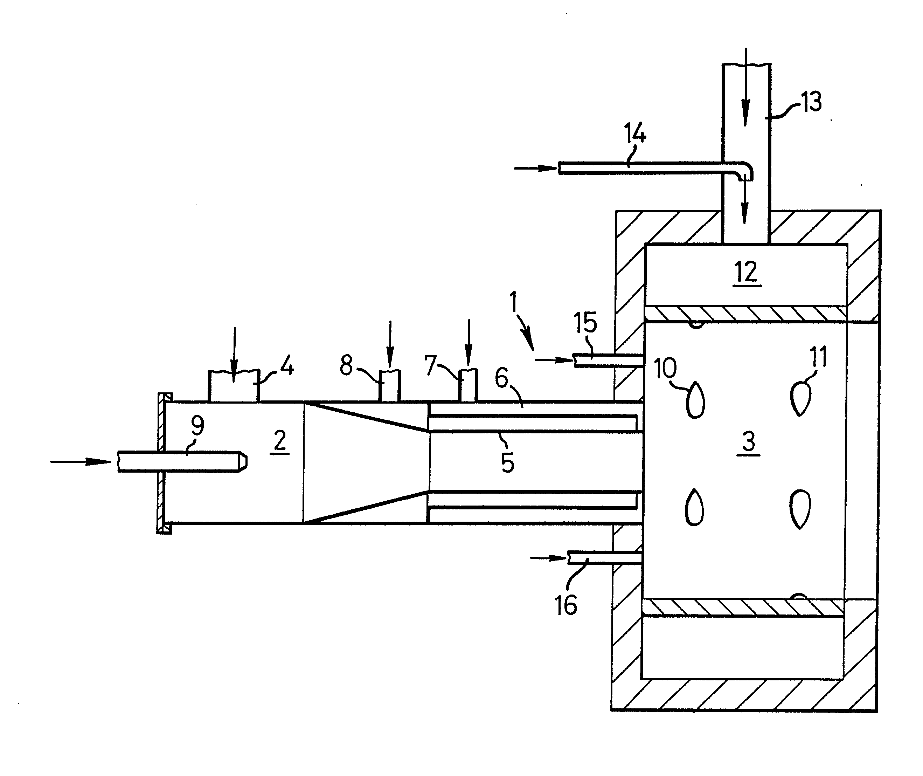

For a better understanding of the invention reference will now be made, by way of example, to the accompanying drawing which shows a schematic cross-section through a burner in accordance with the invention.

Referring to the drawing, there is shown a burner for burning particulate plastics material. The burner, which is generally identified by reference numeral 1, comprises a feed chamber 2 and a mixing chamber 3. The feed chamber 2 is provided with an inlet 4 through which particulate material can be introduced at a constant rate by a screw conveyor (not shown). The feed chamber 2 tapers towards a tube 5 which is of uniform internal circular cross-section throughout its length and extends from the feed chamber 2 to the mixing chamber 3. The tube 5 is surrounded by a cooling jacket 6 having a water inlet 7 and a water outlet 8. A pipe 9 projects into the feed chamber 2 and is connected to an air line (not shown). The tube 5 and pipe 9 are mounted on the longitudinal axis of the burner 1.

The mixing chamber 3 is provided with two sets of openings 10 and 11 which communicate with a manifold 12 which is fed with oxygen-enriched air from an air duct 13 into which opens an oxygen supply pipe 14.

Four conduits (only two of which 15 and 16 are shown) are positioned around the tube 5 and are connected to a supply of natural gas (not shown). The burner 1 is also provided with a pilot light (not shown).

In use, air is introduced into the mixing chamber 3 via manifold 12 and natural gas is introduced into the mixing chamber 3 via the conduits 15 and 16. The mixture is then ignited. Air is blown through pipe 9 and polyethylene particles having a size between 1 and 3 mm are dropped through inlet 4 at a constant rate by the screw conveyor (not shown). The air passing through pipe 9 entrains the polyethylene particles and carries them through tube 5 into the mixing chamber 3.

A predetermined volume of oxygen is then admitted through oxygen supply pipe 14 so that the atmosphere within the manifold 12 contains approximately 25% (by volume) oxygen.

It will be appreciated that the total quantity of natural gas and polyethylene which can be stoichiometrically burnt is fixed by the total amount of oxygen present in the mixing chamber 3. Accordingly, as the amount of polyethylene is increased the amount of natural gas must be reduced. The feed of polyethylene is increased and the supply of natural gas decreased until the polyethylene is not properly burnt. This can be determined visually by examining the flame and by observing when unburnt particles collect downstream of the burner.

The velocity of air leaving pipe 9 must be sufficient to carry the desired flow of polyethylene particles into the mixing chamber 3 but not so high that the particles pass straight through the mixing chamber unburnt. Again, optimum conditions are determined by trial on site.

Cooling the tube 5 has proved absolutely essential to the success of the invention. In particular, it is believed that the cooling tends to reduce the probability of particles agglomerating before they enter the mixing chamber 3. In addition, the cooling inhibits any polyethylene which touches the wall of the tube melting and sticking to the wall of the tube. In this connection it is essential that the tube 5 is of uniform internal cross-section although it need not necesarily be of circular internal cross-section.

Various modifications to the arrangement described are envisaged, for example the tube 5 could simply be cooled by, for example, blocking off inlet 7, introducing air into outlet 8, and allowing the warm air to enter the mixing chamber 3 through an opening adjacent the end of the tube 5 where it enters the mixing chamber 3.

Whilst the present burner is particularly suitable for burning polyethylene, it is envisaged that it will also be suitable for burning other plastics materials including natural and synthetic rubber, polyvinyl chloride and polystyrene. The burner may also be suitable for burning coal powder.

## CLAIMS

1.　　A burner for burning particulate plastics material, which burner comprises a feed chamber, a mixing chamber of generally circular internal cross-section, an inlet for admitting particulate plastics material into said feed chamber, a tube of substantially uniform internal cross-section extending between said feed chamber and said mixing chamber, means for, in use, cooling said tube, a pipe for, in use, introducing air or oxygen enriched air into said feed chamber to entrain particulate plastics material in said feed chamber and convey it through said tube into said mixing chamber, a first set of openings arranged to introduce oxygen enriched air into said mixing chamber so that it flows around the circumference of said mixing chamber in one sense, a second set of openings axially displaced from said first set of openings and arranged to introduce oxygen enriched air into said mixing chamber so that it flows around the circumference of said mixing chamber in the opposite sense, and at least one conduit for introducing a fuel into said mixing chamber adjacent the outlet of said tube.

2.　　A burner as claimed in Claim 1, wherein the means for cooling said tube comprises a water jacket.

3.　　A burner as claimed in Claim 1 or 2, wherein said tube is positioned on the longitudinal axis of the burner and there are several conduits for introducing said fuel into said mixing chamber circumjacent the tube.

4.　　A burner as claimed in any preceding Claim wherein said conduit(s) are connected to a supply of natural gas.